(19) Europäisches Patentamt
European Patent Office
Office européen des brevets

(11) Publication number : **0 584 967 A1**

(12) **EUROPEAN PATENT APPLICATION**

(21) Application number : **93306046.9**

(22) Date of filing : **30.07.93**

(51) Int. Cl.$^5$ : **C08G 65/26,** C08G 65/28, C08G 18/50, C08G 18/38, C07D 233/32, C08L 63/00

(30) Priority : **13.08.92 US 928582**
**13.08.92 US 928583**
**03.12.92 US 984760**

(43) Date of publication of application :
**02.03.94 Bulletin 94/09**

(84) Designated Contracting States :
**DE FR GB**

(71) Applicant : **TEXACO CHEMICAL COMPANY**
**3040 Post Oak Boulevard**
**Houston, Texas 77056 (US)**

(72) Inventor : **Waddill, Harold George**
**8712 Bluegrasse Drive**
**Austin, Texas 78759 (US)**
Inventor : **Cuscurida, Michael**
**3543 Greystone No. 1056**
**Austin, Texas 78731 (US)**
Inventor : **Su, Wei-Yang**
**11814 Knights Bridge**
**Austin, Texas 78759 (US)**
Inventor : **Renken, Terry Lee**
**9300 Bell Mountain Drive**
**Austin, Texas 78730 (US)**

(74) Representative : **Brock, Peter William et al**
**URQUHART-DYKES & LORD 91 Wimpole Street**
**London W1M 8AH (GB)**

(54) **Polyether polyols and polyetherdiamines containing imidazolidone groups.**

(57) The invention provides polyether imidazolidone compounds of the formula :

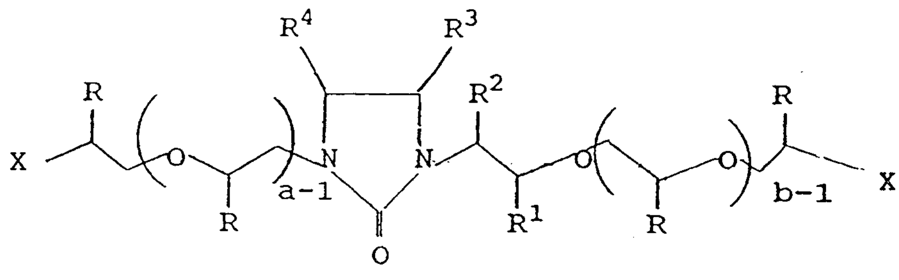

(I)

wherein R is H or alkyl having 1 to 16 carbon atoms, $R^1$, $R^2$, $R^3$ and $R^4$ are selected from hydrogen and alkyl having 1 to 4 carbon atoms, X is $-NH_2$ or -OH, and a + b equals n, a number having a value of 2 to 80.

The compounds in which X is OH are useful in the preparation of polyurethane foams. The compounds in which X is $NH_2$ are useful in the preparation of polyurea elastomers, or for the curing of epoxy resins.

EP 0 584 967 A1

This invention relates to polyetherpolyols and polyetherdiamines and, more particularly, this invention relates to novel polyols and aminated polyols derived from imidazolidones. The hydroxy-terminated compounds can be used in the preparation of polyurethane foams and the amino-terminated compounds can be used in the curing of epoxy resins, and in the production of polyurea elastomers. The novel compounds can be produced by a reaction sequence in which aminoethylethanolamine is reacted with urea to produce 1-(2'-hydroxyethyl)-2-imidazolidone (HEIMD) which is alkoxylated to form the novel hydroxy-terminated polyol, containing the imidazolidone group (cyclic urea), which is subsequently reductively aminated to produce the novel amino-terminated compound.

The novel polyetherdiamines, containing cyclic urea, produce elastomers with good properties and can be used alone or in combination with known polyoxyalkyleneamines as curing agents for epoxy resins.

Employing these polyetherdiamines it is possible to prepare curing agents having a broad range of molecular weights, useful in a variety of epoxy polyurea and polyamide applications. The variety of possible combinations and molecular weights can result in cured products having a broad range of physical properties.

The novel polyetherdiamines, termed HEIMD-containing polyetheramines, exhibit improved elastomeric properties and can be used alone or combined with known polyoxyalkyleneamine curing agents and reacted with multifunctional epoxy resins to produce systems which possess a level of flexibility and toughness not usually achieved. Due to the unique structure of these amines, which contain cyclic urea groups, cured systems are more resistant to impact and are more extensible than are systems cured with blends of other polyetheramines of equivalent weight.

The amination of long alkoxylated alkyl chains terminated by hydroxyl groups is well-known in the art.

US-A-3654370 teaches the amination of polyoxyalkylene polyols to form the corresponding amines by means of ammonia and hydrogen over a catalyst prepared by the reduction of a mixture of the oxides of nickel, copper and chromium. The amination is carried out at a temperature of 150 to 275°C and a pressure of 3.5 to 34.6 MPa (500 to 5000 psig).

A number of patents describe catalysts for producing primary or secondary amines. See, for example: US-A-4766245; US-A-4152345; US-A-4153581; US-A-4409399; US-A-3390184; US-A-3373204; US-A-3347926; US-A-4014933; US-A-4973761; and US-A-5003107.

Though methods are disclosed in the art for aminating polyols and for catalysts to accomplish amination, it does not appear from any available art that there has been disclosed the preparation of a diamine composition as disclosed herein which contains an imidazoline group, nor does there appear to be any suggestion of a cyclic urea within a polyetherdiamine which is useful in polyurea and polyamide applications.

It is known in the art that compounds with primary and secondary amine functions can be used as reactive hardeners in epoxy resin formulations employed for protective coatings, electrical embodiments, adhesives, etc. Many of the known polyethylenediamines have been used for such applications; see Grayson et al., ed., Kirk-Othmer Encyclopedia of Chemical Technology, Third Edition, Vol. 7, p. 593.

It is also known in the art that the utility of the polyethylenepolyamines as curing agents or hardeners for epoxy resin compositions can be extended through the use of numerous derivatives. For example, hydroxy-substituted amine can be prepared by the reaction of a polyethylenepolyamine with ethylene oxide or propylene oxide. Cyanoethylated polyethylenepolyamines represent another useful class of derivatives.

Substituted imidazolines prepared by the condensation of polyethylenepolyamines with carboxylic acids or carboxylic acid derivatives have also been employed as epoxy curing agents. These curing agents are proposed for use in aqueous emulsion systems and to provide coatings with improved hydrolytic stability.

Polyethylenepolyamines can be condensed with di- or trifunctional fatty carboxylic acids obtained from the thermal polymerization of vegetable oil fatty acids to produce liquid, reactive polyamide resins. Various polyethylene polyamines may be used in the preparation of polyamides, which may be characterised as low molecular weight, highly branched, highly viscous polymers with high amine functionality. The liquid polyamides often provide substantial improvements in flexibility of cured composites, leading to higher impact resistance and flexural strength.

Other derivatives of lower viscosity can be prepared by reaction of polyethylenepolyamines with α,β-unsaturated esters. Viscosity reduction can also be effected by blending the polyamines with the higher polyethylenepolyamines.

Other derivatives are prepared by reacting polyethylenepolyamines with an aliphatic, hydroxyl-containing carboxylic acid, with tall oil fatty acids, and with keto-acids.

The products of polyethylenepolyamines and aromatic monoisocyanates, lower aliphatic aldehydes, epoxidized fatty nitriles and propylene sulphide are also useful as epoxy curing agents.

There is always a need in the field of epoxy curing agents for compounds which provide improvements in toughness (resistance to impact) and flexibility (elongation) of cured compositions, as measured by tests which are well-known in the art.

It would represent a substantial advance in the art if a curing agent were commercially available which had distinct, measurable improvements in strength properties, i.e. resistance to impact and elongation.

It would also be very useful in the art if such a curing agent could be used alone or blended with other curing agents in a predictable way to modify properties of cured systems.

Another embodiment of this invention relates to use of the hydroxy-terminated compounds for producing flexible polyurethane foams by reacting an organic polyisocyanate and a mixture of a polyether polyol and the novel hydroxy-terminated compound in the presence of a urethane catalyst and a blowing agent. The resulting flexible polyurethane foams, which contain an internal cyclic urea group (imidazolidone) exhibit improved tear and elongation properties over polyurethane foams prepared with prior art polyols.

The present invention provides a polyether imidazolidone compound of the formula:

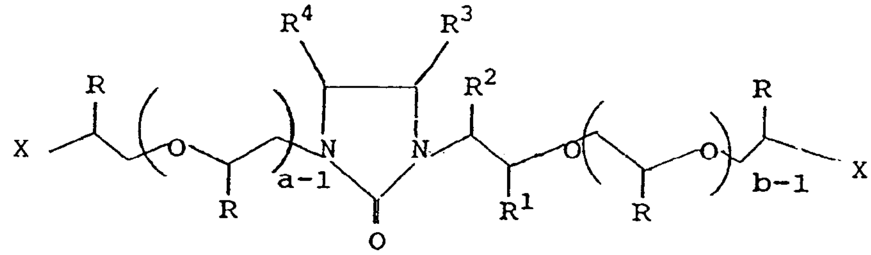

(I)

wherein R is H or alkyl having 1 to 16 carbon atoms, $R^1$, $R^2$, $R^3$ and $R^4$ are selected from hydrogen and alkyl having 1 to 4 carbon atoms, X is $-NH_2$ or -OH, and a + b equals n, a number having a value of 2 to 80.

The novel compounds, therefore, can have the formula:

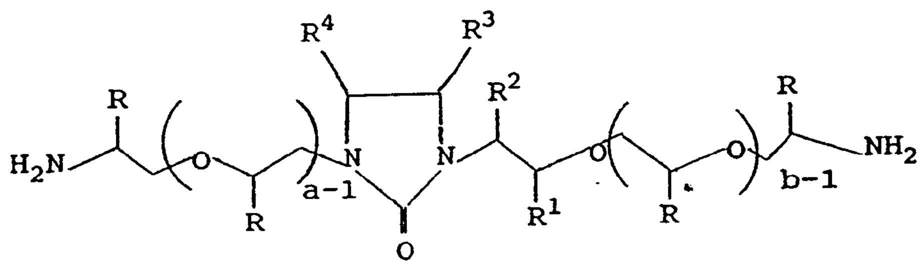

(II)

or

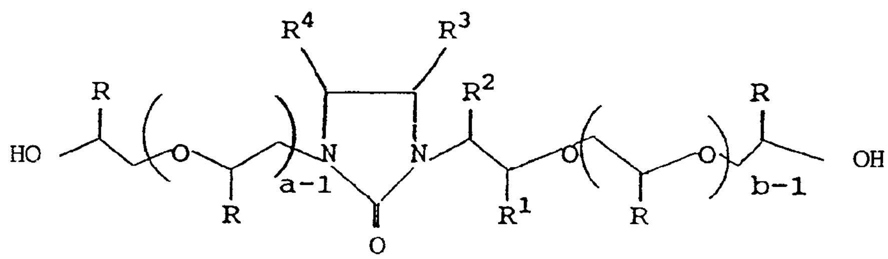

(III)

Preferably, $R^1$, $R^2$, $R^3$ and $R^4$ are each hydrogen, and preferably R is selected from hydrogen, methyl or ethyl.

The present invention also provides a process for the preparation of the compounds as defined above, in which:

(a) a 1-(2'-hydroxyalkyl)-2-imidazolidone of the formula

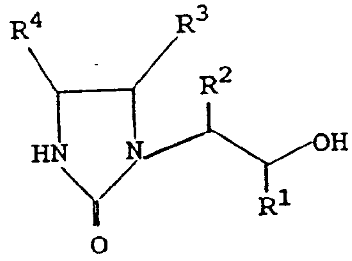

(IV)

wherein $R^1$, $R^2$, $R^3$ and $R^4$ have the meanings given above, is formed by reacting an (N-aminoalkyl)-β-hydroxy alkylamine of the formula

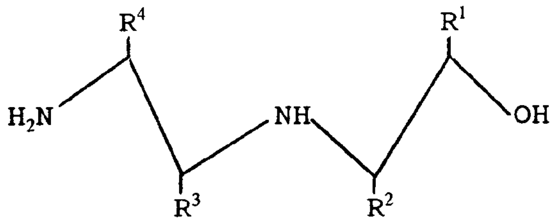

(V)

with urea, dimethylcarbonate, ethylene carbonate or propylene carbonate,
(b) the 1-(2'-hydroxyalkyl)-2-imidazoline is reacted with an alkylene oxide of the formula

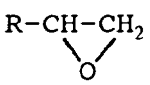

(VI)

wherein R has the meaning given above, to produce a compound having the formula (III), which can be reductively aminated to form the polyether diamine compound of formula (II).

In a preferred embodiment, the polyol of formula (III) is reductively aminated in step (c) by passing ammonia, hydrogen and the polyol over a catalyst comprising nickel and/or cobalt, optionally in combination with a transition metal promoter selected from copper, chromium, molybdenum, manganese, iron and zinc, or mixtures thereof, preferably at a temperature of 150 to 300°C and a pressure of 3.5 to 28 MPa (500 to 4000 psig).

According to the invention, a compound having the formula

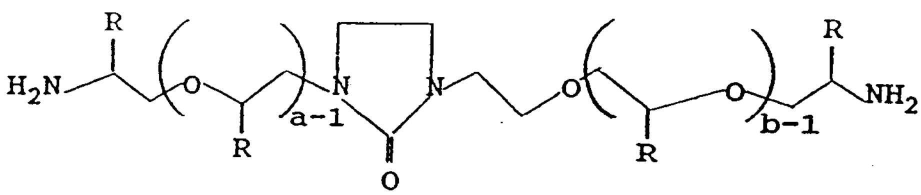

(VII)

wherein R is H or alkyl having 1 to 16 carbon atoms and a + b = n, wherein n is a number from 2 to 80, can be used as a curing or co-curing agent for epoxy resins, or as an amine reactant for the production of polyurea elastomers. The polyols from which these amines are derived, can be used in the production of polyurethane foams.

The amine-terminated products of this invention are useful as epoxy curing agents, and in polyamide and polyurea applications. They may be reacted with multifunctional epoxy resins to produce tough, flexible materials. The amine may be used as the sole epoxy curing agent or blended with other known epoxy curing agents to modify resin properties.

The HEIMD-containing polyetheramines may be reacted with multifunctional epoxy resins to produce materials having a degree of toughness and flexibility substantially improved over anything available in the art.

The level of toughness and flexibility developed in systems using these HEIMD derivatives has previously been quite difficult to attain. The significant improvements are believed to be due in part to the unique structure

of these compounds, which comprises the incorporation of the cyclic urea group(s). Systems cured with these aminated alkoxylated HEIMDs are more resistant to impact and more extensible than are systems cured with blends of polyetheramines of equivalent weight, as will be demonstrated in the Examples. They are also efficient modifiers of less flexible epoxy systems.

The sequence for preparing the novel imidazolidone containing polyetherdiamines, starting with the substituted imidazolidone, can be represented best by the following :

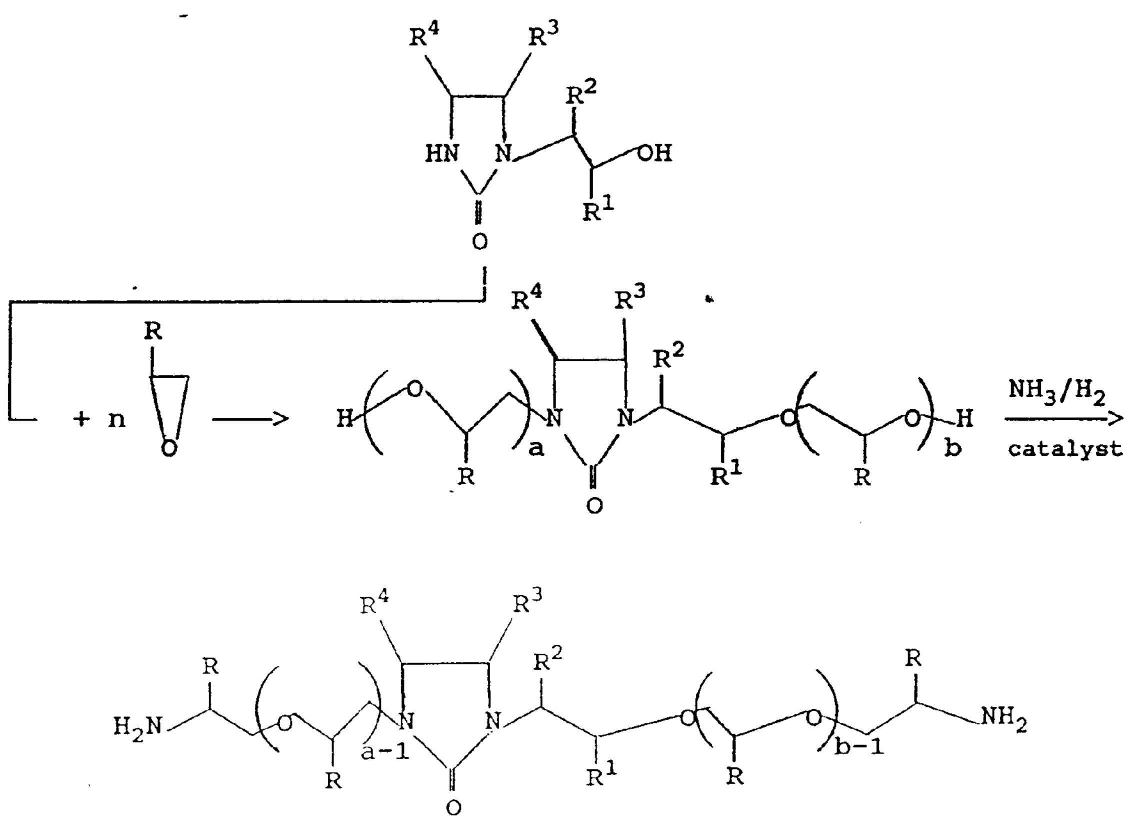


where R is H or alkyl having 1 to 16 carbon atoms, $R^1$, $R^2$, $R^3$ and $R^4$ are selected from hydrogen and alkyl radicals having from 1 to 4 carbon atoms, n is the number of moles of alkylene oxide employed in alkoxylation, and a + b = n, wherein n is from 2 to 80.

The initiator 1-hydroxyalkyl-2-imidazolidone, can be easily prepared by reacting urea, dimethyl carbonate, ethylene carbonate or propylene carbonate with the corresponding aminoalkylalkanolamine and has the structure:

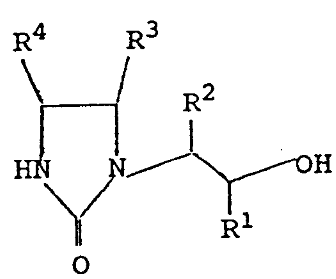

Examples of 1-2'-hydroxyalkyl-2-imidazolidones that are suitable initiators in the desired synthesis of polyols include 1-(2'-hydroxyethyl)-2-imidazolidone, 1-(2'-hydroxypropyl)-2-imidazolidone, 1-(2'-hydroxyethyl)-4-methyl-2-imidazolidone, 1-(2'-hydroxethyl)-5-methyl-2-imidazolidone, 1-(2'-hydroxyethyl)-4,5-dimethyl-2-imidazolidone, 1-(2'-hydroxypropyl)-4,5-dimethyl-2-imidazolidone, and 1-(2'-hydroxy-1'-methylpropyl)-2-imidazolidone.

The alkoxylation reaction employed to prepare the propylene oxide adduct of this cyclic urea initiator utilized to prepare the compounds of this invention is carried out according to methods well-known in the art, as described in Examples 2 and 3, and Table I.

The alkoxylation proceeds using alkylene oxides having 2 to 16 carbon atoms, or combinations thereof. Particularly suitable are ethylene oxide, propylene oxide and butylene oxide or combinations thereof. It can be noted from Table I that variations in the number of moles of alkylene oxides, or mixtures thereof, used in alkoxylation result in polyol products having predictably different hydroxyl numbers, expressed as mg KOH/g, which seems likewise to result in variations in the properties observed in the elastomers produced using the novel polyetherdiamines.

The alkoxylated substituted HEIMD products can be converted into the corresponding primary amines by reaction with ammonia over a hydrogenation/dehydrogenation catalyst. In general, reductive amination catalysts are composed primarily of nickel, cobalt or copper, or combinations of these metals, as the active components. The catalyst can contain other metals as well, such as iron, zinc, chromium, manganese, zirconium, molybdenum, tungsten, rhenium, and ruthenium. Other promoters such as barium, magnesium and phosphorus have been used in reductive amination catalysts. Precious metals, such as platinum and palladium, have also been used in some catalysts. The catalyst can be unsupported or supported. Common supports that have been used for these catalysts include alumina, silica, silica-alumina, zirconia, magnesia, and titania.

In the examples of reductive amination described below, the catalyst used comprised (1) nickel and copper on alumina and (2) nickel, copper, chromium, and molybdenum supported on alumina. The quality of nickel compound and copper, along with chromium and molybdenum which are employed in the catalyst may vary. Good results are observed where the catalyst comprised 10 to 40 wt% of nickel, 2 to 25 wt% of copper and 0.1 to 2 wt% each f chromium and molybdenum, as well as at least 50 wt% of the refractory metal oxide support. A preferred catalyst composition comprises 15 to 30 wt% of nickel, 3 to 20 wt% of copper and 0,5 to 1.0 wt% each of chromium and molybdenum.

It was observed that no significant amount of product degradation occurred during the amination reactions. A number of other catalysts known in the art to be active in reductive amination, for example Raney nickel, would be expected to be active and selective, and therefore, to be useful in this reaction.

The temperature for the amination of the polyol should be in the range of 150 to 350°C and is preferably from 180 to 240°C.

The pressure for amination should be in the range from 3.5 to 28 MPa (500 to 4000 psig) and preferably from 10.4 to 17.3 MPa (1500 to 2500 psig).

It has been discovered that the aminated alkoxylated 1-(2'-hydroxyethyl)-2-imidazolidone (HEIMD) derivatives having the formula (VII) have properties which make them particularly valuable as curing agents.

They can be used in epoxy resin compositions, such as films, castings, adhesives, etc., comprising a vicinal polyepoxide having an epoxide equivalency greater than 1.8 and a curing amount of a curing agent, such as the HEIMD amine.

These HEIMD amine derivatives may be used as the sole epoxy curing agent, or can be blended with other known curing agents, for example polyoxyalkyleneamines, to modify resin properties.

Such polyoxyalkyleneamines, for example, include, but are not limited to, polyoxyalkylenediamines of the JEFFAMINE® D-series, as exemplified by the structural formula:

$$H_2N\underset{|}{\overset{CH_3}{C}}HCH_2-(OCH_2\overset{CH_3}{\underset{|}{C}}H)_x-NH_2$$

where x is 2 to 35 and includes, for example, JEFFAMINE® D-230, JEFFAMINE® D-400 and JEFFAMINE® D-2000. The HEIMD derivative may also be used in combination with a polyoxyalkylenediamine of the EDR-series represented by the formula:

$$H_2N\text{-}CH_2CH_2(\text{-}O\text{-}CH_2CH_2)_n\text{-}NH_2$$

where n = 2 or 3, represented by JEFFAMINE® EDR-148 or EDR-192.

Generally, the JEFFAMINE® polyoxyalkylenepolyamines employed in conjunction with the HEIMD derivatives of this invention will have molecular weights of 148 or more, preferably from 230 to 2000. All of the above JEFFAMINE® products are marketed by the Texaco Chemical Company, Houston, Texas.

The HEIMD-containing polyetheramines can be combined, not only with polyoxyalkyleneamines, such as those of the JEFFAMINE® series mentioned above, but with a variety of other commercially available amines. Suitable examples are ethyleneamines, including, but not limited to diethylenetriamine or triethylenetetramine, and aromatic or cycloaliphatic amines and catalytic amines such as imidazoles.

Examples 10, 10a, 10b, 10c, 11 and 11a compare properties of systems cured with the HEIMD-containing polyetheramine with properties of systems cured with JEFFAMINE® amines or blends of commercially available amines. The data confirm significant improvements in the strength and flexibility.

When the curing agent comprises a blend of the HEIMD-containing polyetheramine of this invention and another polyoxyalkylenepolyamine, usually the HEIMD-containing polyetherdiamine will comprise from 15 to 100 wt% of the compound, with the balance being the polyoxyalkylenepolyamine.

Generally, the amine-cured vicinal polyepoxide-containing compositions are organic materials having an average of at least 1.8 reactive 1,2-epoxy groups per molecule. These polyepoxide materials can be monomeric or polymeric, saturated or unsaturated, aliphatic, cycloaliphatic, aromatic or heterocyclic, and may be substituted if desired with other substituents beside the epoxy groups, e.g., hydroxyl groups ether radicals, or aromatic halogen atoms. These vicinal polyepoxide-containing compounds typically have an epoxy equivalent weight (EEW) of 150 to 250. Preferably the base resin, which has an epoxy equivalent weight of from 175 to 195, is derived by condensing epichlorohydrin with Bisphenol A (otherwise known as 4,4'-isopropylenediphenol or 2,2-bis(p-hydroxyphenyl)propane) to form 2,2-bis(p-2,3-epoxy propoxyphenyl)propane.

Preferred polyepoxides are those of glycidal ethers prepared by epoxidizing the corresponding allyl ethers or reacting, by known procedures, a molar excess of epichlorohydrin and an aromatic polyhydroxy compound; i.e., Bisphenol A, novolak, or resorcinol. The epoxy derivatives of ethylene or isopropylidene bisphenols are especially preferred.

A widely-used class of polyepoxides which are useful according to the present invention includes the resinous epoxy polyethers obtained by reacting an epihalohydrin, such as epichlorohydrin, with either a polyhydric phenol or a polyhydric alcohol. An illustrative, but by no means exhaustive, listing of suitable dihydric phenols includes 4,4'-isopropylidene bisphenol, 2,4'-dihydroxydiphenylethylmethane, 3,3'-dihydroxydiphenyldiethylmethane and 3,4'-diphenylmethylpropylmethane.

Among the polyhydric alcohols which can be co-reacted with an epihalohydrin to provide these resinous epoxy polyethers are such compounds as ethylene glycol, propylene glycols, butylene glycols, pentane diols, bis-(4-hydroxycyclohexyl)dimethylmethane, 1,4-dimethylolbenzene, glycerol, 1,2,6-hexanetriol, trimethylolpropane, mannitol, sorbitol, erythritol, pentaerythritol, their dimers, trimers and higher polymers, e.g., polyethylene glycols, polypropylene glycols, triglycerol, dipentaerythritol and the like, polyallyl alcohol, polyhydric thioethers, etc.

An epoxy resin which may be cured by the process of this invention, the use of which is demonstrated in Examples 13 to 18, is one prepared, for example, by the reaction of Bisphenol A with epichlorohydrin in the presence of sodium hydroxide. After condensation is complete, the crude resin is freed of residual epichlorohydrin, washed well to remove salt and soluble by-products, and recovered. Among those which have been employed to demonstrate the effectiveness of the present invention are diglycidyl ethers of Bisphenol A, such as a liquid epoxy resin which has a molecular weight of approximately 380, a functionality of approximately 2, and an equivalent weight of approximately 185-192.

Optionally, the epoxy resin formulations of the present invention can include an accelerator to speed the amine cure of the epoxy resin, especially at ambient temperatures. In several applications, such acceleration is beneficial, especially when an epoxy resin is used as an adhesive in a flammable environment, thus making cure at elevated temperature inconvenient or even hazardous. Lee, H. and Neville, K., HANDBOOK OF EPOXY RESINS, pp. 7-14, describes the use of certain amine-containing compounds as epoxy curing agent accelerators.

Many accelerators are known in the art which can be utilized in accordance with the present invention. Examples include salts of phenols, salicylic acid, amine salts of fatty acids, such as those disclosed in US-A-2681901, and tertiary amines, such as those disclosed in US-A-2839480.

It will further be realized that various conveniently employed additives can be mixed with the polyepoxide-containing composition of the present invention before final cure. For example, in certain instances it may be desirable to add minor amounts of hardeners, along with various other accelerators and curing agent systems well-known in the art. Additionally, conventional additives, such as pigments, dyes, fillers, and flame-retarding agents, which are compatible and natural or synthetic resins, can be added.

The preparation of a cured epoxy resin is carried out in the following manner:

Epoxy resin is normally used without dilution and without other additives.

A solvent may be used where components are very viscous.

To a component containing the epoxy resin is added an equivalent amount of HEIMD-containing polyetherdiamine, alone or in combination with a polyoxyalkylenediamine. The mixture is then mixed, degassed, and poured into moulds.

The HEIMD-containing polyetherdiamines or blends, where mixed with other amine curatives, should be present in the epoxy resin in an amount sufficient to provide 0.8 to 1.2 amino ($NH_2$) groups per oxirane group

of the epoxy resin.

In the embodiment of the invention relating to the production of polyurethane foams, polyether polyols useful in forming the mixtures with the polyoxyalkylene glycols of this invention include polyols having a hydroxyl number of 20 to 60. The polyether polyol is generally an alkylene oxide adduct of a polyhydric glycol with a functionality from 2 to 8, e.g. ethylene glycol, propylene glycol, glycerol, trimethylolpropane, sorbitol, sucrose, methylglucoside, 1,2,6-hexanetriol, erythritol or pentaerythritol.

The alkylene oxide employed to prepare the polyether polyols may suitably be ethylene oxide, propylene oxide, or 1,2-butylene oxide or a mixture of some or all of these. The polyol will preferably have a molecular weight within the range of from about 2,000 to about 10,000 and more preferably, from about 2,000 to about 8,000. The alkylene oxide is preferably propylene oxide or a mixture of propylene oxide and ethylene oxide.

Polyisocyanates useful for making the polyurethane foams may be chosen from 2,4-toluene diisocyanate, 2,6-toluene diisocyanate, dianisidine diisocyanate, bitolylene diisocyanate, naphthalene-1,4-diisocyanate, xylyene-1,4-diisocyanate, xylylene-1,3-diisocyanate, bis(4-isocyanatophenyl)methane, bis(3-methyl-4-isocyanatophenyl)methane, 4,4'-diphenylpropane diisocyanate and mixtures thereof.

Greatly preferred aromatic polyisocyanates used in the practice of the invention are 2,4- and 2,6- toluene diisocyanates, and methylene-bridged polyphenyl polyisocyanate mixtures which have a functionality from 2 to 4. These latter isocyanate compounds are generally produced by the phosgenation of corresponding methylene-bridged polyphenyl polyamines, which are conveniently produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in the literature and in many patents; e.g., US-A-2683730; US-A-2950263; US-A-3012008; US-A-3344162; and US-A-3362979.

Most preferred methylene-bridged polyphenyl polyisocyanate mixtures used here contain 20 to 100 weight percent of methylene diphenylidiisocyanate isomers, with the remainder being polymethylene polyphenyl polyisocyanates having higher functionalities and higher molecular weights. Typical of these are polyphenyl polyisocyanate mixtures containing 20 to 100 weight percent of methylene diphenyldiisocyanate isomers, of which 20 to 95 weight percent thereof is the 4,4'-isomer, with the remainder being polymethylene polyphenyl polyisocyanates of higher molecular weight that have an average functionality of 2.1 to 3.5. These isocyanate mixtures are known, commercially available materials and can be prepared by the processes described in US-A-3362976.

Catalysts have long been considered necessary for the formation of polyurethanes. The catalyst is employed to promote at least two, and sometimes three major reactions, that must proceed simultaneously and competitively at balanced rates during the process in order to provide polyurethanes with the desired physical characteristics. One reaction is a chain extending isocyanate-hydroxyl reaction by which the hydroxyl-containing molecule reacted with the isocyanate-containing molecule to form a urethane. This increase the viscosity of the mixture and provides a polyurethane containing secondary nitrogen atoms in the urethane groups. A second reaction is a cross-linking isocyanate/urethane reaction, by which an isocyanate-containing molecule reacts with a urethane group containing a secondary nitrogen atom. The third reaction which may be involved is an isocyanate/water reaction, by which an isocyanate-terminated molecule is extended, and by which carbon dioxide is generated to blow or assist in the blowing of foam. This third reaction is not essential if an extraneous blowing agent, such as a halogenated, normally liquid hydrocarbon, or a gas such as carbon dioxide, is employed, but is essential if all or even part of the gas for foam generation is to be generated by this **in situ** reaction (e.g., in the preparation of "one-shot" flexible polyurethane foams). Such catalysts may include one or more of the following:

(a) Tertiary amines, such as trimethylamine, triethylamine, N-methylmorpholine, N-ethylmorpholine, N,N-dimethylbenzylamine, N,N-dimethylethanolamine, N,N,N'N'-tetramethyl-1,3-butanediamine, N,N-dimethyl-piperazine, and 1,4-diazabicyclo(2.2.2.)octane;

(b) Tertiary phosphines, such as trialkylphosphines, or dialkylbenzylphosphines;

(c) Strong bases, such as alkali metal and alkaline earth metal carboxylates. In other words, salts of organic acids with a variety of metals, such as alkali metals, alkaline earth metals, Al, Sn, Pb, Mn, Co, Ni, and Cu, including, for example, sodium acetate, stannous octoate, stannous oleate, lead octoate, and metallic driers such as manganese and cobalt naphthenate;

(d) Acidic metal salts of strong acids such as ferric chloride, stannic chloride, stannous chloride, antimony trichloride, bismuth nitrate and chloride;

(e) Chelates of various metals, such as those which can be obtained from acetylacetone, benzylacetone, trifluoroacetyl acetone, ethyl acetoacetate, salicyaldehyde, cyclopentanone-1-carboxylate, acetylacetonelamine, bisacetylacetonealkylenediamines, or salicylaldehydeimine, with various metals such as Be, Mg, Zn, Od, Pd, Ti, Zr, Sn, As, Bi, Cr, Mo, Mn, Fe, Co, and Ni;

(f) Alcoholates and phenolates of various metals such as $Ti(OR)_4$, $Sn(OR)_4$ and $Al(OR)_3$, wherein R is alkyl or aryl, and the reaction products of alcoholates with carboxylic acids, beta-diketones, and 2-(N,N-dialkylamino)alkanols;

(g) Organometallic derivatives of tetravalent tin, trivalent and pentavalent As, Sb, and Bi, and metal carbonyls of iron and cobalt.

Of course, combinations of any of the above polyurethane catalysts may be employed. usually the amount of catalyst employed is from 0.01 to 5.0 parts weight percent. More often the amount of catalyst used is 0.2 to 2.0 weight percent.

In preparing the polyurethane foams of this invention, foaming is generally carried out in the presence of water and optionally, additional inorganic blowing agents. The water is normally used in amounts of 0.5 to 6.0 weight %, preferably 10 to 4.0 weight %, based on polyether polyol and the alkoxylated hydroxy-2-imidazolidone present. The organic blowing agents optionally used along with the water are known in the art and are, for example, monofluorotrichloromethane, difluorodichloromethane, methylene dichloride and others generally known in the art.

Additives to regulate the cell size and the cell structure, for example, silicones or siloxanes, usually silicone-glycol copolymers, may also be added to the foaming mixture. Fillers, flame retarding additives, dyes or plasticizers of known types may also be used. These and other additives are well known to those skilled in the art.

In the various Examples the following terms are used to describe properties measured.

HDT (ASTM D648-72)

Heat distortion temperature is the temperature at which a polymer sample, distorts under load, upon heating under specified conditions. HDTs can also be used to indicate the degree of cross-linking or extent of cure of an epoxy resin.

Shore D Hardness (ASTM D-2240-81)

Measured at 0 and at 10 seconds indentation hardness with durometer.

Izod Impact Strength (J/m and ft-lb/in) (ASTM D256-81)

Izod impact testing is carried out with the pendulum-type device where the test specimen is positioned as cantilever beam with the notched side facing the striker. Five samples are tested for impact with each formulation, with the average being recorded as IZOD impact strength.

Tensile Strength (MPa and psi) (ASTM D638-80)

The rupture strength (stress/strain product at break) per unit area of material subjected to a specified dynamic load. "Ultimate tensile strength" is the force, at break, when a sample is pulled apart.

Tensile Modulus (MPa and psi)

Stress/strain.

Flexural Strength (MPA and psi) (ASTM D790-80)

A measure of the ability of a material to withstand failure due to bending.

Flexural Modulus (MPa and psi)

Elongation at Break, %

The following non-limiting Examples illustrated the present invention.

EXAMPLE 1

Preparation of 1-(2'-hydroxyethyl)-2-imidazolidone

A five litre three-necked flask equipped with a thermometer, condenser, stirrer and nitrogen inlet as charged with aminoethylethanolamine (1560g, 15 mole) and urea (900g, 15 mole). The reaction mixture was heated at 125°C for 7 hours and then at 150°C until no more gas was released. About 1945g of product was obtained. The product was confirmed by NMR spectrum to be 1-(2'-hydroxyethyl)-2-imidazolidone.

Other products were prepared in the same way.

| Products | Sample No. | Hydroxy No., mg KOH/g |
|---|---|---|
| HEIMD + 10.7PO | 2A | 150.0 OH no. polyol |
| HEIMD + 4EO + 2PO | 2B | 245.0 OH no. polyol |
| HEIMD + 10EO + 3PO | 2C | 142.8 OH no. polyol |
| HEIMD + 5PO | 2D | 271.0 OH no. polyol |
| HEIMD + 2.5PO | 2E | 414.7 OH no. polyol |
| HEIMD + 37.5PO | 2F | 58.4 OH no. polyol |

Reaction charges, details of preparation and properties of these products are given in Table 1.

TABLE 1

| Sample Charge | 2A | 2B | 2C | 2D | 2E | 2F |
|---|---|---|---|---|---|---|
| HEIMD, Kg | 1.82 | 1.82 | 1.82 | 3.63 | 6.81 | 8.17 |
| HEIMD, lb | 4 | 4 | 4 | 8 | 15[c] | 18[a] |
| Potassium hydroxide, g[a] | 27.2 | 18.1 | 18.1 | 36 | 43.2 | 157 |
| Ethylene oxide, Kg | | 2.45 | 6.13 | | | |
| Ethylene oxide, lb | - | 5.4 | 13.5 | - | - | - |
| Propylene oxide, Kg | 8.67 | 1.63 | 2.45 | 8.08 | 7.58 | 32.69 |
| Propylene oxide, lb | 19.1 | 3.6 | 5.4 | 17.8 | 16.7 | 72 |
| Magnesol 30/40, g[b] | 218 | 181 | 144 | 290 | 350 | 122.5 |
| **Reaction Details** | | | | | | |
| Oxide addition time, h | 3.5 | 3.1 | 2.1 | 4.5 | 0.75 | 10.75 |
| Temperature, °C | 110-115 | 110-115 | 110-115 | 110-120 | 110-115 | 110-115 |
| Pressure, MPa, max | 0.44 | 0.44 | 0.44 | 0.36 | 0.50 | 0.44 |
| Pressure, psig, max | 50 | 50 | 50 | 38 | 58 | 50 |
| **Properties** | | | | | | |
| Hydroxyl no., mg KOH/g | 150 | 245 | 142.8 | 271 | 414.7 | 58.4 |
| Water, wt% | 0.04 | 0.05 | 0.033 | 0.06 | 0.08 | 0.04 |
| pH in 10:6 isopropanol-water | 8.4 | 9.4 | 8.8 | 8.9 | 10.6 | 9.4 |
| Colour, Pt-Co | 125 | 125 | 175 | 250 | 75 | 125 |
| Sodium, ppm | 0.5 | 2.9 | 0.7 | 1.4 | 3.0 | 6.2 |
| Potassium, ppm | 1.1 | 1.0 | 2.6 | 1.7 | 4.8 | 4.7 |
| Viscosity, °C, cs | | | | | | |
| 25 | 441 | 453 | 320 | 867 | 873 | 513 |
| 38 | 184 | 116 | 76.3 | 311 | 524 | 242 |

a Added as 45% aqueous solution; dried to water content of less than 0.1% prior to oxide addition.
b Added as aqueous slurry.
c 400 mm PO adduct of HEIMD.

The 2000 molecular weight propylene oxide adduct of HEIMD prepared in Example 2F had a polydispersity of 1.12 as compared to 1.27 for a propylene glycol 2000. Polydispersity is an indication of the molecular weight distribution of the polyol, and is defined as the ratio of the weight average molecular weight ($\overline{Mw}$) to the number

average molecular weight ($\overline{Mn}$), i.e., $\frac{\overline{Mw}}{\overline{Mn}}$.

EXAMPLE 2

Preparation of Alkylene Oxide Adducts of 1-(2'-hydroxyalkyl)-2-imidazolidone

HEIMD (1.82 Kg/4.0 lb) and 45 % potassium hydroxide (40.3 g) were charged into a 40 liter reactor. The reactor was then purged with prepurified nitrogen. Maintaining a nitrogen purge, the reactor was heated to 110°C and the initiator was dried to a water content of less than 0.15 weight % using both vacuum and nitrogen stripping. Ethylene oxide (2.45 Kg/5.4 lb) was then reacted at 110 to 115°C and 0.44 MPa (50 psig) over a 1.0 hour period. The reaction mixture was then digested for 0.75 hour to an equilibrium pressure. Propylene oxide (1.63 Kg/3.6 lb) was then reacted at 110 to 115°C and 0.44 MPa (50 psig) over a 0.5 hour period. After digestion to an equilibrium pressure, the alkaline product was cooled to 95°C and neutralized by stirring for two hours, with 145 g of Magnesol 30/40 absorbent added as an aqueous slurry. The neutralized adduct product was then vacuum-stripped to a minimum pressure, nitrogen-stripped, and filtered. Properties of the finished polyoxyalkylene glycol were as follows:

| Properties | |
|---|---|
| Hydroxyl no., mg KOH/g | 245 |
| Water, wt. % | 0.05 |
| pH in 10:6 isopropanol-water | 9.4 |
| Colour, Pt-Co | 125 |
| Sodium, ppm | 2.9 |
| Potassium, ppm | <1 |
| Viscosity, °C, cs | |
| 25 | 453 |
| 38 | 186 |

EXAMPLE 3

Amination of Alkoxylated Imidazolidone

The Amination was performed in a 100 $cm^3$ tubular reactor fully charged with 77.4g of a supported Ni-Cu/$Al_2O_3$ catalyst, (29.7% Ni, 8.7% Cu on 1 mm [1/25"] alumina extrudates). Polyol (Sample 2B), ammonia and hydrogen were each continuously fed to the heated reactor. Reactor pressure was maintained with a back pressure regulator. Reactor effluent samples were stripped of ammonia and water before analysis or testing. Results along with reactor conditions are shown in Table 2 below.

| TABLE 2 | | |
|---|---|---|
| Sample | 3A | 3B |
| Pressure, MPa | 13.9 | 14.1 |
| Pressure, psig | 2005 | 2035 |
| Mid Rx Temp, °C | 230 | 240 |
| Polyol, g/h | 60.0 | 62.0 |
| Ammonia, g/h | 63.0 | 91.0 |
| $H_2$, 1/h (STP) | 7.0 | 7.0 |
| Acetylatables, meq/g | 4.870 | 4.890 |
| Total Amine, meq/g | 2.760 | 3.200 |
| Primary Amine, meq/g | 2.570 | 3.000 |
| Secondary Amine (c), meq/g | 0.190 | 0.200 |
| % Conversion[a] | 56.67 | 65.44 |
| % Selectivity[b] | 93.12 | 93.75 |

a  % Conversion = $\frac{\text{Total amine}}{\text{Acetylatables}} \times 100$

b  % Selectivity = $\frac{\text{Primary amine}}{\text{Total amine}} \times 100$

## EXAMPLE 4

### Amination of Alkoxylated Imidazolidone

The amination was performed in a 100 $cm^3$ tubular reactor fully charged with 65.2g of a 1 mm (1/25 inch) diameter extruded catalyst comprising 38.4% Ni, 5.9% Cu, 1.1% Cr and 0.62% Mo on an alumina support. The 142.8 hydroxyl number polyol (Sample 2C), ammonia and hydrogen were each continuously fed to the heated reactor. Reactor pressure was maintained with a back pressure regulator. Reactor effluent samples were stripped of ammonia and water before analysis or testing. Results along with reactor conditions are shown in Table 3 below.

| TABLE 3 | | | | |
|---|---|---|---|---|
| Sample | 4A | 4B | 4C | 4D |
| Pressure, MPa | 14.20 | 14.23 | 14.06 | 14.23 |
| Pressure, psig | 2045 | 2050 | 2025 | 2050 |
| Mid Rx Temps, °C | 211 | 221 | 230 | 225 |
| Polyol, g/h | 103.0 | 103.0 | 102.0 | 103.0 |
| Ammonia, g/h | 129.0 | 124.0 | 127.0 | 131.0 |
| $H_2$, 1/h (STP) | 9.4 | 9.4 | 9.4 | 9.4 |
| Acetylatables, meq/g | 2.700 | 2.700 | 2.700 | 2.670 |
| Total Amine, meq/g | 2.310 | 2.540 | 2.560 | 2.562 |
| Primary Amine, meq/g | 2.270 | 2.460 | 2.480 | 2.506 |
| Secondary Amine, meq/g | 0.040 | 0.080 | 0.080 | 0.056 |
| % Conversion[a] | 85.56 | 94.07 | 94.81 | 95.96 |
| % Selectivity[b] | 98.27 | 96.85 | 96.88 | 97.81 |

EXAMPLE 5

AMINATION OF HEIMD + 5PO POLYOL

The amination was performed in the same reactor and with the same catalyst as that described in Example 4. Polyol (Sample 2D), ammonia and hydrogen were continuously fed to the reactor at rates of 100 g/h, 125 g/h and 9.4 l/h (at STP). The reactor was heated to 230°C and the rector pressure was kept near 13.9 MPa (2000 psig). Product was collected over 69 hours of operation. The material was stripped of ammonia, water and other lights and then analyzed to give the following data:

| | |
|---|---|
| Acetylatables, meq/g | 4.78 |
| Total Amine, meq/g | 4.64 |
| Primary Amine, meq/g | 4.59 |
| Water, wt% | 0.04 |

EXAMPLE 6

AMINATION OF HEIMD + 10.7 PO POLYOL

The amination was performed in the same reactor and with the same catalyst as that described in Example 4. Polyol (Sample 2A), ammonia and hydrogen were continuously fed to the reactor at rates of 100 g/h, 125 g/h and 9.4 1/h (at STP). The reactor was heated to 225°C and the reactor pressure was kept near 13.9 MPa (2000 psig). Product was collected over 83 hours of operation. The material was stripped of ammonia, water and other lights and then analyzed to give the following data:

| | |
|---|---|
| Acetylatables, meq/g | 2.72 |
| Total Amine, meq/g | 2.62 |
| Primary Amine, meq/g | 2.60 |

EXAMPLE 7

AMINATION OF 2000 MW PO ADDUCT OF HEIMD

The Amination was performed in a 1200 $cm^3$ tubular reactor fully loaded with the same catalyst as that described in Example 4. Polyol (Sample 2F), ammonia and hydrogen were continuously fed to the reactor at rates of 1.0 Kg/h (2.20 lb/h), 1.25 Kg/h (2.75 lb/h) and 72 litre/h (at STP). The reactor was heated to 220°C and the reactor pressure was kept near 13.9 MPa (2000 psig). Product was collected over 30 hours of operation. The material was stripped of ammonia, water and other lights and then analyzed to give the following data:

| | |
|---|---|
| Acetylatables, meq/g | 1.07 |
| Total Amine, meq/g | 1.05 |
| Primary Amine, meq/g | 1.04 |

EXAMPLE 8

USAGE EXAMPLE

To a small cup was added 40g of sample 4D and 14.8g of ISONATE® 143L. ISONATE® 143L is pure MDL modified so that it is liquid at ambient temperatures. It is a product of the Upjohn Co. After stirring with a tongue depressor, a tough polyurea elastomer was obtained.

EXAMPLE 9

| Properties of Epoxy Resin Systems Cured with Various Aminated Alkoxylated 1-(2'-Hydroxyethyl)-2-Imidazolidones (HEIMD) | | | | |
|---|---|---|---|---|
| Formulation | 9A | 9B | 9C | 9D |
| Liquid epoxy resin (EEW 185-192) | 100 | 100 | 100 | 100 |
| Aminated alkoxylated HEIMD | 73 | -- | -- | -- |
| 4 EO/2 PRO; eq. wt. ~135 | | | | |
| Aminated propoxylated HEIMD | -- | 57 | -- | -- |
| 5 PRO; eq. wt. ~105 | | | | |
| Aminated propoxylated HEIMD | -- | -- | 92 | -- |
| 10 PRO; eq. wt. ~170 | | | | |
| Aminated alkoxylated HEIMD | -- | -- | -- | 100 |
| 10 EO/3 PRO; eq. wt. ~185 | | | | |
| Properties: Cured 3mm Castings | | | | |
| cured: 2 hours 80°C, 3 hours 125°C | | | | |
| Shore D Hardness, 0-10 sec. | 65-46 | 85-83 | 72-60 | 38-25 |
| HDT, °C, 1.82 MPa (264 psi) | 22.1 | 68.8 | 26.2 | -- |
| Izod impact strength, J/m | 721 | 117 | 619 | -- |
| Izod impact strength, ft-lb/in | 13.5 | 2.2 | 11.6 | -- |
| Tensile strength, MPa | 5.0 | 65.5 | 9.8 | 3.0 |
| Tensile strength, psi | 730 | 9500 | 1420 | 430 |
| Tensile modulus, MPa | 18.8 | 3171.7 | 317.9 | -- |
| Tensile modulus, psi | 2730 | 460000 | 46100 | -- |
| Elongation at break, % | 163 | 7.1 | 140 | 71 |
| Flexural strength, MPa | 0.7 | 112.4 | 1.6 | -- |
| Flexural strength, psi | 97 | 16300 | 230 | -- |
| Flexural modulus, MPa | 9.8 | 3089.0 | 9.8 | -- |
| Flexural modulus, psi | 1420 | 448000 | 1420 | -- |

Comments: Variations in structure and molecular weight of the subject polyetheramines result in cured epoxy resin systems with quite variable physical properties. An epoxy resin cured with any of the polyetheramines developed variable properties dependent largely on amine molecular weight. Properties varied in the degree of flexibility and resistance to applied tensile and flexural forces. A degree of toughness (resistance to impact) and flexibility (elongation; modulus) that are not normally achieved with epoxy systems were demonstrated with several of the subject polyetheramine cured systems. The polyetheramine prepared solely from propylene oxide (9B), although of higher equivalent weight than an amine containing both propylene and ethylene oxide (9A), produced a cured resin with considerably higher modulus indicating that better physical properties might be expected with polyetheramines prepared solely from propylene oxide rather than those containing both propylene and ethylene oxide.

## EXAMPLE 10

Comparison of Properties: Epoxy Resin Systems Cured with Aminated Alkoxylated 1-(2'-Hydroxyethyl)-2-Imidazolidone (HEIMD) vs. Commercial Polyetheramine

| Formulation | 10A | 10B |
|---|---|---|
| Liquid epoxy resin (EEW 185-192) | 100 | 100 |
| Aminated propoxylated HEIMD[1] 5 PRO; eq. wt. ~105 | 57 | -- |
| JEFFAMINE® D-400[2] E. wt. ~102 | -- | 55 |
| **Properties:** Cured 3mm Castings cured: 2 hours 80°C, 3 hours 125°C | | |
| Shore D Hardness, 0-10 sec. | 85-83 | 81-79 |
| HDT, °C, 1.82 MPa (264 psi) | 68.8 | 42.2 |
| Izod impact strength, J/m | 117 | 59 |
| Izod impact strength, ft-lb/in | 2.2 | 1.1 |
| Tensile strength, MPa | 65.5 | 51.7 |
| Tensile strength, psi | 9500 | 7500 |
| Tensile modulus, MPa | 3171.7 | 3302.7 |
| Tensile modulus, psi | 460000 | 479000 |
| Elongation at break, % | 7.1 | 4.1 |
| Flexural strength, MPa | 112.4 | 92.4 |
| Flexural strength, psi | 16300 | 13400 |
| Flexural modulus, MPa | 3089.0 | 2992.4 |
| Flexural modulus, psi | 448000 | 434000 |
| % wt gain, 24-h water boil | 4.3 | 3.0 |
| 3-h acetone boil | 9.6 | 31.3 |

1) Structure: 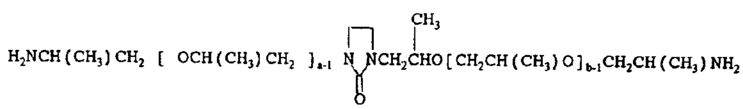 (a + b = 5)

2) Structure: $H_2NCH(CH_3)CH_2[OCH_2CH(CH_3)]_xNH_2$ (x = 5.6)

Comments: Comparison of physical properties obtained on curing with the HEIMD-containing polyetheramine and a polyetheramine of quite similar equivalent weight, JEFFAMINE®, D-400, are shown. Cured properties obtained with the HEIMD-containing amine are clearly superior in a number of significant properties. HDT, impact, tensile and flexural strength and elongation values were higher for the HEIMD-containing polyether. The system cured with the HEIMD-amine was slightly less resistant to boiling water, but was considerably improved in resistance to boiling acetone, a measure of solvent or chemical resistance. These improvements in properties also were noted in systems cured with other amounts of curing agent.

EXAMPLE 10a

| Heat Deflection Temperature vs. Stoichiometry: HEIMD Amine vs. JEFFAMINE® D-400 (AHEW ~ 102-105) | | | | | |
|---|---|---|---|---|---|
| | Percent of Stoichiometry | | | | |
| | 80 | 90 | 100 | 110 | 120 |
| Amin. propoxyl. HEIMD | 53.2 | 61.8 | 68.0 | 63.3 | 55.0 |
| (5 PRO; eq. wt. ~105 | | | | | |
| JEFFAMINE® D-400 | 27.6 | 35.3 | 42.2 | 44.1 | 39.6 |
| (eq. wt. ~102) | | | | | |

Comments: The HEIMD-containing polyetheramine as an epoxy resin curing agent, provided cured systems over a wide concentration range that were considerably improved in heat resistance over those cured with a commercial polyetheramine.

EXAMPLE 10b

| Tensile Strength vs. Stoichiometry: HEIMD Amine vs. JEFFAMINE® D-400 (AHEW ~ 102-105) | | | | | |
|---|---|---|---|---|---|
| | Percent of Stoichiometry | | | | |
| | 80 | 90 | 100 | 110 | 120 |
| Amin. propoxyl. HEIMD | 70.0 | 69.6 | 66.2 | 64.1 | 62.1 |
| (5 PRO; eq. wt. ~105) | 10150 | 10100 | 9600 | 9300 | 9000 |
| JEFFAMINE® D-400 | 14.5 | 40.7 | 51.7 | 47.6 | 43.4 |
| (eq. wt. ~102) | 2100 | 5900 | 7500 | 6900 | 6300 |

Comments: Systems cured with HEIMD-containing amine exhibited considerably higher tensile strength over a wide concentration range than did a similar commercial polyetheramine. The tensile strength is given in MPa (psi).

EXAMPLE 10c

Solvent Resistance[1] vs. Stoichiometry:
HEIMD Amine vs. JEFFAMINE® D-400 (AHEW ~ 102-105)

| | Percent of Stoichiometry | | | | |
|---|---|---|---|---|---|
| | 80 | 90 | 100 | 110 | 120 |
| Amin. propoxyl. HEIMD (5 PRO; eq. wt. ~105) | 28.47 | 15.03 | 9.38 | 10.67 | 16.00 |
| JEFFAMINE® D-400 (eq. wt. ~102) | 56.62 | 46.26 | 31.31 | 23.32 | 27.68 |

1) Measured by weight gain of 63.5 x 12.7 x 3.2 mm (2.5 x 0.5 x 0.125 in.) samples after boiling in acetone for three hours

Comments: The epoxy resin system cured with HEIMD-containing polyetheramine was considerably more resistant to attack by boiling acetone than were formulations cured with a commercial polyetheramine. This was shown through a wide concentration range for the curing agent.

EXAMPLE 11

| Comparison of Properties: Epoxy Resin Systems Cured with Aminated Alkoxylated 1-(2'-Hydroxyethyl)-2-Imidazolidone (HEIMD) vs. Commercial Polyetheramine Blend | | |
|---|---|---|
| Formulation | | |
| Liquid epoxy resin (EEW 185-192) | 100 | 100 |
| Aminated propoxylated HEIMD | 92 | -- |
| 10 PRO; eq. wt. ~170 | | |
| JEFFAMINE® D-400/D-2000 Blend | -- | 94 |
| 50/50 pbw.; eq. wt. ~174 | | |
| Properties: Cured 3mm Castings | | |
| cured: 2 hours 80°C, 3 hours 125°C | | |
| Shore D Hardness, 0-10 sec. | 69-60 | 47-30 |
| HDT, °C, 1.82 MPa (264 psi) | 22.7 | 23.1 |
| Izod impact strength, J/m | 603 | 464 |
| Izod impact strength, ft-lb/in | 11.3 | 8.7 |
| Tensile strength, MPa | 9.2 | 3.0 |
| Tensile strength, psi | 1330 | 430 |
| Tensile modulus, MPa | 115.1 | 7.1 |
| Tensile modulus, psi | 16700 | 1030 |
| Elongation at break, % | 141 | 54.5 |
| Flexural strength, MPa | 2.4 | 0.8 |
| Flexural strength, psi | 350 | 120 |
| Flexural modulus, MPa | 201.3 | 10.2 |
| Flexural modulus, psi | 29200 | 1480 |
| % wt gain, 24-h water boil | 4.6 | 3.2 |
| 3-h acetone boil | 38.6 | 46.4 |
| Tear Strength, N/m | 284 | 67 |
| Tear Strength, pli | 162 | 38 |

Comments: When compared with a system cured with a blend of commercial polyetheramines (JEFFAMINE® D-400/D-2000) of matching equivalent weight, the formulation cured with HEIMD-containing polyetheramine was clearly superior in strength and flexibility. Higher impact strength, elongation and resistance to acetone boil (chemical resistance) were features of the HEIMD-amine cure.

EXAMPLE 11a

| Total Impact Energy vs. Stoichiometry: HEIMD Amine vs. JEFFAMINE® D-400/D-2000 (AHEW ~ 170-175) | | | | | | | |
|---|---|---|---|---|---|---|---|
| | | Percent of Stoichiometry | | | | | |
| | | 80 | 90 | 100 | 110 | 120 | 130 |
| Amin. propoxyl. HEIMD | inch.pounds | 152 | 166 | 180 | 192 | 174 | 136 |
| (10 PRO; eq. wt. ~170) | J | 17.2 | 18.8 | 20.3 | 21.7 | 19.7 | 15.4 |
| JEFFAMINE® D-400/D-2000 blend | inch.pounds | 66 | 105 | 124 | 114 | --- | --- |
| (50/50 pbw; eq. wt. ~174) | J | 7.5 | 11.9 | 14.0 | 12.9 | | |

Comments: Values for total energy (inch.pounds and Joules) required for catastrophic failure as measured by the Dynatap falling dart impact test (ASTM D-3763) were considerably higher for the HEIMD-containing polyetheramine than for the system cured with a blend of commercial polyetheramines of equivalent weight. This is an indication of a higher degree of toughness of the system cured with HEIMD-amine. Although maximum values were shown at 100-110% of stoichiometry, impact values were quite high over the total range tested.

EXAMPLE 12

Properties of Epoxy Resin Systems Cured with HEIMD-Containing Polyetheramine (AHEW[1) ~ 108) and JEFFAMINE® D-400 (AHEW ~ 105)

| Formulation | 6974 2C | 6974-32C |
|---|---|---|
| Liquid epoxy resin (EEW 185-192) | 100 | 100 |
| Aminated propoxylated HEIMD (6826-17-5; 5PRO) | 57 | -- |
| JEFFAMINE® D-400 | -- | 55 |
| **Properties:** Cured 3mm Castings | | |
| cured: 2 hours 80°C, 3 hours 125°C | | |
| Shore D Hardness, 0-10 sec. | 85-83 | 81-79 |
| HDT, °C, 1.82 MPa (264 psi) | 68.0 | 42.2 |
| Izod impact strength, J/m | 117 | 59 |
| Izod impact strength, ft-lb/in | 2.2 | 1.1 |
| Tensile strength, MPa | 66.2 | 51.7 |
| Tensile strength, psi | 9600 | 7500 |
| Tensile modulus, MPa | 3171.7 | 3302.7 |
| Tensile modulus, psi | 460000 | 479000 |
| Elongation at break, % | 8.0 | 4.1 |
| Flexural strength, MPa | 114.5 | 92.4 |
| Flexural strength, psi | 16600 | 13400 |
| Flexural modulus, MPa | 3123.4 | 2992.4 |
| Flexural modulus, psi | 453000 | 434000 |
| % wt gain, 24-h water boil | 4.3 | 3.0 |
| 3-h acetone boil | 9.4 | 31.3 |

1) AHEW = amine hydrogen equivalent weight

Comments: A stronger, more flexible cured epoxy system was prepared with the HEIMD-polyetheramine as curing agent than was possible with JEFFAMINE® D-400. Areas of considerable improvement were shown in heat resistance (HDT) and weight gain with boiling acetone (chemical resistance). The HEIMD-containing system was slightly more sensitive to moisture (weight gain with water boil) than was the formulation cured with JEFFAMINE® D-400.

EXAMPLE 13

| Properties of Epoxy Resin System Cured with HEIMD-Containing Polyetheramine (AHEW ~ 170), JEFFAMINE® D-400/D-2000 Blend (AHEW ~ 174) and JEFFAMINE® DU-700 (AHEW ~ 219) | | | |
|---|---|---|---|
| Formulation | | | |
| Liquid epoxy resin (EEW 185-192) | 100 | 100 | 100 |
| Aminated alkoxylated HEIMD | 92 | -- | -- |
| (6880-6-1; 10PRO) | | | |
| JEFFAMINE® D-400/D-2000 Blend (50/50 pbw.)- | -- | 94 | -- |
| JEFFAMINE® DU-700 | -- | -- | 118.5 |
| Properties: Cured 3mm Castings | | | |
| cured: 2 hours 80°C, 3 hours 125°C | | | |
| Shore D Hardness, 0-10 sec. | 69-60 | 47-30 | 63-47 |
| HDT, °C, 1.82 MPa (264 psi) | 22.7 | 23.1 | -- |
| Izod impact strength, J/m | 603 | 464 | -- |
| Izod impact strength, ft-lb/in | 11.3 | 8.7 | -- |
| Tensile strength, MPa | 9.2 | 3.0 | 5.4 |
| Tensile strength, psi | 1330 | 430 | 780 |
| Tensile modulus, MPa | 115.1 | 7.1 | 39.0 |
| Tensile modulus, psi | 16700 | 1030 | 5650 |
| Elongation at break, % | 140.9 | 54.5 | 94.5 |
| Flexural strength, MPa | 2.4 | 0.8 | -- |
| Flexural strength, psi | 350 | 120 | -- |
| Flexural modulus, MPa | 201.3 | 10.2 | -- |
| Flexural modulus, psi | 29200 | 1480 | -- |
| % wt gain, 24-h water boil | 4.6 | 3.2 | 1.2 |
| 3-h acetone boil | 38.6 | 46.4 | 43.8 |
| Tear Strength, N/m | 284 | 67 | 154 |
| Tear Strength, pli | 162 | 38 | 88 |

Comments: When compared with a system cured with a blend of JEFFAMINE® D-400 and D-2000) of matching equivalent weight, the formulation cured with HEIMD-containing polyetheramine was clearly superior in strength and flexibility. Higher impact strength, elongation and resistance to acetone boil (chemical resistance) were features of the HEIMD-amine cure. When compared to a product similar in structure JEFFAMINE® DU-700, again strength properties and elongation favour the HEIMD amine cured system. DU-700 is known to develop tough, impact resistant cured systems.

## EXAMPLES 14 - 18

### Preparation of Flexible Polyurethane Foam Products

These examples show the use of the 58.4 hydroxyl no. propylene oxide adduct of Example 2F in the preparation of flexible urethane foam. It further shows that flexible foams made from the HEIMD-based polyols, which incorporated into flexible foam formulations, produced hand-mixed foams with improved tear and elongation properties as compared to those made with a 2000 m.w. polypropylene glycol (PPG-2000).

Formulations, details of preparation, and properties of these foams are shown in Table 4 below:

TABLE 4

| Example No. | 14 | 15 | 16 | 17 | 18 |
|---|---|---|---|---|---|
| Formulation, pbw | | | | | |
| Thanol®F-3020 Polyol[a] | 100 | 90 | 75 | 90 | 75 |
| Texox®PPG-2000 Polyol[b] | - | 10 | 25 | - | - |
| Propylene oxide adduct of HEIMD (Example 2F) | - | - | - | 10 | 25 |
| Water | 4.0 | 4.0 | 4.0 | 4.0 | 4.0 |
| L-711 silicone[c] | 1.0 | 1.0 | 1.0 | 1.0 | 1.0 |
| 33% triethylenediamine[d] | 0.3 | 0.3 | 0.3 | 0.3 | 0.3 |
| Catalyst T-10[e] | 0.4 | 0.4 | 0.4 | 0.4 | 0.4 |
| Toluene diisocyanate | 49.7 | 49.7 | 49.7 | 49.7 | 49.7 |
| NCO/OH | 1.05 | 1.05 | 1.05 | 1.05 | 1.05 |
| Details | | | | | |
| Cream Time, sec. | 10 | 10 | 10 | 10 | 10 |
| Rise Time, sec. | 115 | 113 | 109 | 103 | 109 |
| Cure Temp. °C (hr) | 90-100 (1.0) | 90-100 (1.0) | 90-100 (1.0) | 90-100 (1.0) | 90-100 (1.0) |
| Properties[f] | | | | | |
| Density, pcf | 1.58 | 1.59 | 1.50 | 1.56 | 1.59 |
| Density, Kg/m$^3$ | 25.3 | 25.5 | 24.0 | 25.0 | 25.5 |
| Tensile Strength, psi | 13.9 | 12.4 | 13.6 | 13.7 | 14.2 |
| Tensile Strength, KPa | 95.8 | 85.5 | 93.8 | 94.5 | 97.9 |
| Tear Strength, pli | 2.19 | 2.07 | 2.67 | 2.43 | 2.7 |
| Tear Strength, N/m | 3.8 | 3.6 | 4.7 | 4.3 | 4.7 |
| Elongation, % | 139 | 127 | 151 | 141 | 166 |
| Compression set % | | | | | |
| 50% | 8.8 | 7.0 | 9.9 | 8.7 | 10.6 |
| 75% | 8.0 | 6.6 | 7.2 | 8.4 | 11.9 |
| Humid aging (5 h. 121°C, 100% RH) CLD | 18.8 | 20.9 | 21.1 | 16.3 | 18.2 |
| Composition, set % | 4.2 | 6.6 | 6.5 | 7.7 | 8.7 |

a 3000 m.w. propylene oxide / ethylene oxide adduct of glycerin, made by Eastman Chemical Co.

b 2000 m.w. polypropylene glycol made by Texaco Chemical Company.

c Silicon surfactant made by Union Carbide Chemical Co.

d Texacat TD-33, triethlenediamine made by Texaco Chemical Company.

## Claims

1. A polyether imidazolidone compound of the formula:

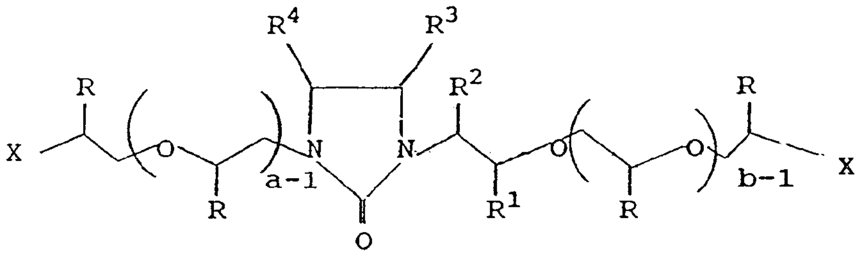

(I)

wherein R is H or alkyl having 1 to 16 carbon atoms, $R^1$, $R^2$, $R^3$ and $R^4$ are selected from hydrogen and alkyl having 1 to 4 carbon atoms, X is $-NH_2$ or -OH, and a + b equals n, a number having a value of 2 to 80.

2. A compound according to Claim 1 and having the formula:

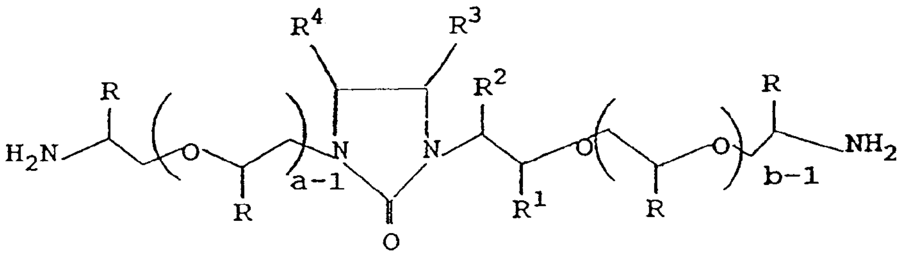

(II)

wherein R, $R^1$, $R^2$, $R^3$, $R^4$, a and b have the meanings given in Claim 1.

3. A compound according to Claim 1 and having the formula:

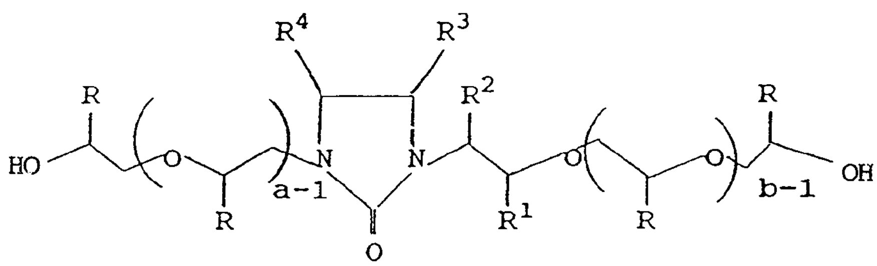

(III)

wherein R, $R^1$, $R^2$, $R^3$, $R^4$, a and b have the meanings given in Claim 1.

4. A process for the preparation of a compound according to Claim 1 characterised by:
(a) forming a 1-(2'-hydroxyalkyl)-2-imidazolidone of the formula

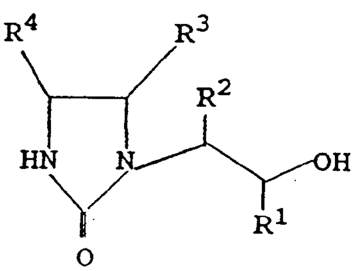

wherein $R^1$, $R^2$, $R^3$ and $R^4$ have the meanings given in Claim 1, by reacting an (N-aminoalkyl)-β-hydroxy alkylamine of the formula

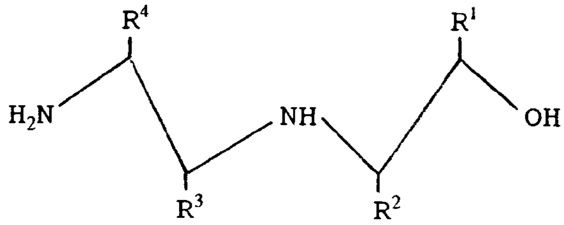

with urea, dimethylcarbonate, ethylene carbonate or propylene carbonate,
(b) reacting the 1-(2'-hydroxyalkyl)-2-imidazolidone with an alkylene oxide of the formula

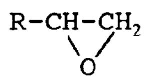

wherein R has the meaning given in Claim 1, to produce a hydroxy-terminated compound according to Claim 3, and
(c) reductively aminating the hydroxy-terminated compound to form an amine-terminated compound according to Claim 2.

5. A process according to Claim 4 characterised in that the 1-(2'-hydroxyalkyl)-2-imidazoline is selected from 1-(2'-hydroxyethyl)-2-imidazolidone, 1-(2'-hydroxypropyl)-2-imidazolidone, 1-(2'-hydroxyethyl-4-methyl)-2-imidazolidone, 1-(2'-hydroxethyl-5-methyl)-2-imidazolidone, 1-(2'-hydroxyethyl-4,5-dimethyl)-2-imidazolidone, 1-(2'-hydroxypropyl-4,5-dimethyl)-2-imidazolidone, and 1-(2'-hydroxy-1'-methylpropyl)-2-imidazolidone.

6. A process according to Claim 4 or 5 characterised in that the alkylene oxide is selected from 1,2-butylene oxide, 2,3-butylene oxide, propylene oxide, ethylene oxide, and mixtures thereof.

7. A process according to any one of Claims 4 to 6 characterised in that the polyol is reductively aminated in step (c) by passing ammonia, hydrogen and the polyol over a catalyst comprising nickel and/or cobalt, optionally in combination with a transition metal promoter selected from copper, chromium, molybdenum, manganese, iron and zinc, or mixtures thereof.

8. Use of a compound according to Claim 3 as an alcohol reactant in the production of polyurethane foams by reaction with a polyisocyanate in the presence of a blowing agent.

9. Use of a compound according to Claim 2 as a curing or co-curing agent for epoxy resins.

10. Use of a compound according to Claim 2 as an amine reactant for the production of polyurea elastomers.

European Patent Office

# EUROPEAN SEARCH REPORT

Application Number
EP 93 30 6046

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DATABASE WPI<br>Derwent Publications Ltd., London, GB;<br>AN 82-64828E<br>& JP-A-57 102 957 (PENTEL KK) 26 June 1982<br>* abstract *<br>--- | 1,3 | C08G65/26<br>C08G65/28<br>C08G18/50<br>C08G18/38<br>C07D233/32<br>C08L63/00 |
| A | CH-A-549 573 (CIBA GEIGY AG)<br>* column 17 - column 18 *<br>--- | 1-3 | |
| A | US-A-4 448 969 (RAMEY C.E. ET AL)<br>* column 14, line 1 - line 8; example 5 *<br>--- | 1-3 | |
| A | EP-A-0 476 779 (UNION CARBIDE CHEMICALS AND PLASTICS CO.)<br>* claim 1; example 1 *<br>--- | 4-7 | |
| A | US-A-4 992 590 (CUSCURIDA M. ET AL)<br>* examples 1,4,9 *<br>----- | 7-10 | |
| | | | TECHNICAL FIELDS SEARCHED (Int.Cl.5) |
| | | | C08G<br>C07D<br>C08L |

The present search report has been drawn up for all claims

| Place of search | Date of completion of the search | Examiner |
|---|---|---|
| THE HAGUE | 30 November 1993 | O'Sullivan, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)